# EUROPÄISCHE PATENTSCHRIFT

(11) **EP 1 541 008 B1**
(45) Veröffentlichungstag und Bekanntmachung des Hinweises auf die Patenterteilung: **14.02.2007**
(21) Anmeldenummer: 03078942.4
(22) Anmeldetag: 12.12.2003
(51) Int. Cl.: A01F 15/07, B65B 11/02, B65B 11/04

(54) **Umwickeln mit nur einem Folienende**
Wrapping with just one film end
Envelopper avec seulement une fin de film

(43) Veröffentlichungstag der Anmeldung: 15.06.2005
(73) Patentinhaber: Lely Enterprises AG, 6300 ZUG (CH)
(72) Erfinder: Lühr, Kord H., 38302 Wolfenbüttel (DE)
(74) Vertreter: Corten, Maurice Jean F.M.

(56) Entgegenhaltungen:
- WO-A-00/15023
- US-A- 5 012 631
- US-A- 5 531 061

## Beschreibung

Die Erfindung betrifft ein Verfahren zum Umhüllen von Körpern, insbesondere von Erntegutballen aus Heu, Stroh oder angewelktem Grüngut mit wenigstens zwei Umhüllmaterialbahnen, welche von je einem Umhüllmaterialbahnvorrat abgezogen und auf den Körper aufgebracht werden, wobei jede Umhüllmaterialbahn am Ende des Umhüllvorganges getrennt und festgehalten wird.

Das vorstehend beschriebene Verfahren lässt sich beispielsweise der DE 197 31 520 A1 oder der WO 00/36903 entnehmen. Hier sind zwei Folienrollen diametral gegenüberliegend an einer Führung angeordnet, die mittig um eine vertikale Drehachse rotierend antreibbar ist. Jeder Folienrolle ist eine seitlich ortsfest angeordnete Schneid-Klemmeinrichtung zugeordnet. Mit diesem Verfahren bzw. dieser Vorrichtung lässt sich die Umhüllzeit gegenüber den "Einarmwicklern" (mit nur einer Folienrolle) nahezu halbieren. Nachteilig ist, dass die zwei abgetrennten Folienenden nicht fest am Ballen anliegen. Wind und Regen lösen die Folienenden meist eine viertel bis eine halbe Umdrehung vom Ballen ab, so dass die Folie nicht mehr verpackungswirksam und damit fehlinvestiert ist. Von noch größerem Nachteil ist das Ablösen der Folienenden bei Vorrichtungen gemäß PCT WO 00/15023. Hierbei wird die Folie während des Umhüllvorganges gleichzeitig von vier über den Umfang mit 90° Winkelabstand gleichmäßig verteilten Folienrollen abgezogen, so dass sich vier Folienenden vom Ballen ablösen können.

Zur Lösung des Problems wird beispielsweise durch die EP 0 887 266 A1 und die EP 103 78 01 B1 vorgeschlagen, einen Folienbereich vor dem Ende des Umhüllvorganges unter die vorhergehende Folienschicht zu ziehen. Hierzu ist eine sehr aufwendige Robotertechnik notwendig mit mehreren sich überlagernden Bewegungsvorgängen, die für den stationären Einsatz geeignet ist, jedoch für den rauhen Feldeinsatz von Landmaschinen weder praxistauglich noch bezahlbar ist.

Eine andere Lösung schlägt die EP 102 50 03 B1 vor. Hierbei sollen die Folienenden mittels die Folie durchstechender Befestigungsnadeln am Ballen fixiert werden. Auch diese Lösung ist nicht praxistauglich, weil sie keine luftdichte Verpackung ermöglicht, die aber für die Silagebildung unbedingt notwendig ist.

Der Erfindung liegt die Aufgabe zugrunde, ein Verfahren der eingangs genannten Art auf einfache Art zu verbessern.

Diese Aufgabe wird erfindungsgemäß dadurch gelöst, dass die Umhüllmaterialbahnen derart getrennt werden, dass wenigstens eine Umhüllmaterialbahn die andere Umhüllmaterialbahn in Wickelrichtung gesehen mit vorbestimmbarer Länge überlappt.

Erfindungsgemäß befestigt die überlappende Umhüllmaterialbahn alle anderen Umhüllmaterialbahnenden am Körper. Eine gegenüber Umwelteinflüssen gesicherte, luftdichte Ballenverpackung mit verbesserter Foliennutzung ist auf einfache Art und Weise gewährleistet. Da die überlappende Umhüllmaterialbahn unter Vorspannung die darunter liegenden Umhüllmaterialbahnenden überwickelt, bleiben diese fest eingeklemmt und können sich auch bei kritischen Bedingungen nicht lösen.

Die weitere Ausgestaltung des Verfahrens sieht vor, dass die letzte Umhüllmaterialbahn zum Überwickeln der auf dem Körper befindlichen, getrennten Umhüllmaterialbahn/en von einer den Körper um eine Achse umkreisenden Umhüllmaterialbahnrolle abgezogen wird. Diese sogenannten Ringwickler umwickeln den Körper gleichzeitig mit zwei bis vier Umhüllmaterialbahnen und besitzen daher eine hohe Wickelleistung. Dabei kann der Körper ruhen gemäß EP 0 887 266 A1 oder der Körper wird gleichzeitig um eine weitere Drehachse gedreht wie in der PCT WO 00/15023 näher dargestellt und beschrieben. In beiden Fällen führt die Verwendung des erfindungsgemäßen Verfahrens zu einer einfachen und wirkungsvollen Sicherung der abgetrennten Umhüllmaterialbahnenden.

Eine hinsichtlich des Umhüllmaterialbahnverbrauches neutrale Lösung wird dann erzielt, wenn die Überlappung der Umhüllmaterialbahnen durch zeitversetzten Wickelbeginn der einen Umhüllmaterialbahn gegenüber der anderen erzeugt wird.

Um alle Umhüllmaterialbahnrollen gleichmäßig zu verbrauchen, schlägt die Erfindung ferner vor, dass die Umhüllmaterialbahnrollen in regelmäßigem Wechsel für die jeweils letzte/n Überwicklung/en der zuerst getrennten Umhüllmaterialbahn/en verwendet werden.

Das Verfahren nach Unteranspruch 11 ist dadurch gekennzeichnet, dass den Körper eine oder mehrere zusätzliche Umhüllmaterialbahnrollen umkreisen, welche zunächst nicht zur Umhüllung verwendet werden und erst nach Aufbrauch der momentan zur Umhüllung dienenden Umhüllmaterialbahnrolle aktiviert werden. Auf diese Art und Weise können einerseits beispielsweise zusätzliche Umhüllmaterialbahnrollen gleicher Qualität bevorratet werden, die bei Bedarf, insbesondere beim Ende der aktuell verwendeten Folienrollen aktiviert werden, wodurch ein sehr einfacher automatischer Folienrollenwechsel ermöglicht wird. Ein weiterer Vorteil besteht darin, dass auch Vorrats-Umhüllmaterialbahnrollen in Bereitschaft gehalten werden können, die sich in Farbe, Dicke, Breite, Vorstreckung und/oder Kennzeichnung unterscheiden, und von denen der Bediener je nach Kundenwunsch eine oder mehrere per Tastendruck auswählt. Darüber hinaus ermöglicht diese Ausgestaltung je nach Bedarf das gleichzeitige Umwickeln mit drei oder mehr Umhüllmaterialbahnen.

Eine Vorrichtung zur Durchführung dieses erfindungsgemäßen Verfahrens mit wenigstens zwei auf einer rotierend antreibbaren Führung angeordneten Umhüllmaterialbahnrollen, denen jeweils eine am Gestell angeordnete Festhalte- und/oder Trenneinrichtung zugeordnet ist, ist dadurch gekennzeichnet, dass wenigstens jeder zuerst vom Körper zu trennenden Umhüllmaterialbahn eine zusätzliche, auf der rotierend antreibbaren Führung angeordnete Festhalte- und Trenneinrichtung zugeordnet ist. Hierbei wird die zuerst getrennte Umhüllmaterialbahn zunächst auf der rotierenden Führung festgeklemmt und die letzte Umhüllmaterialbahn nach dem Überwickeln in der ortsfesten Festhalte- und Trenneinrichtung gehalten und getrennt. Vor dem Umhüllbeginn eines neuen Ballens werden die zuerst auf der rotierenden Führung festgeklemmten Umhüllmaterialbahnenden jeweils an die am Gestell angeordnete Festhalte- und Trenneinrichtung übergeben. Die erfindungsgemäße Vorrichtung benötigt somit nur jeweils eine weitere Festhalte- und Trenneinrichtung für die zuerst abgetrennten Umhüllmaterialbahn/en.

Eine günstige Ausgestaltung der erfindungsgemäßen Vorrichtung wird erreicht, wenn jeder Umhüllmaterialbahnrolle eine auf der rotierenden Führung angeordnete Festhalte- und Trenneinrichtung und zusätzlich wenigstens zwei am Gestell angeordnete Festhalteeinrichtungen vorgesehen sind. Diese Gestaltung ermöglicht baugleiche Festhalte- und Trenneinrichtungen auf der rotierenden Führung einerseits, während die am Gestell angeordneten Festhalteeinrichtungen sehr einfach ausgebildet sind, weil diese nur noch zur Übernahme und zum Festhalten der bereits abgetrennten Umhüllmaterialbahn/en dienen. Alle Umhüllmaterialbahnen, auch die Letzte, werden zunächst auf den auf der rotierenden Führung angeordneten Festhalte-und Trenneinrichtungen festgehalten und abgetrennt. Die Zuordnung einer Umhüllmaterialbahnrolle zu einer am Gestell angeordneten Festhalteeinrichtung ist dadurch frei wählbar.

Damit alle Umhüllmaterialbahnrollen gleichermaßen verbraucht werden, wird bei jedem zu umhüllenden Körper einfach die rotierende Führung um eine Umhüllmaterialbahnrollenposition weiter gedreht. Alternativ erfolgt ein gleichmäßiger Aufbrauch der Umhüllmaterialbahnrollen durch wechselndes Betätigen der am Gestell angeordneten Festhalte- und Trenneinrichtungen, wobei dann die rotierende Führung immer in der gleichen Position angehalten werden kann.

Mit der in Anspruch 17 gekennzeichneten Umhüllvorrichtung werden folgende Vorteile erzielt:
a) Es können wahlweise gleichzeitig zwei, drei oder vier Umhüllmaterialbahnen auf den Rundballen gewickelt werden.
b) Ohne Umrüstaufwand ist ein sehr schneller Umhüllmaterialbahnrollenwechsel möglich, weil nach Aufbrauch der einen Umhüllmaterialbahnrolle nur die bereitgehaltene Umhüllmaterialbahnrolle in die Startposition im Bereich der ortsfesten Festhalteeinrichtung zu fahren ist.
c) Während des Umhüllbetriebes können Rundballen ohne Umrüstaufwand mit Umhüllmaterialbahnen unterschiedlicher Farbe, Kennzeichnung, Dicke oder Breite umwickelt werden.

Zum luftdichten Einwickeln landwirtschaftlicher runder oder eckiger Ballen aus vorgewelktem Gras rotiert der Ballen während der Umhüllung um wenigstens eine Achse und wird gleichzeitig von wenigstens zwei auf der Führung angeordneten Umhüllmaterialbahnrollen um eine quer zur Körper-Rotationsachse gelegene Achse umkreist. Dabei kann die Führung ein antreibbarer Ring sein oder wenigstens zwei Dreharme umfassen mit wenigstens je einer Umhüllmaterialbahnrolle.

Weitere Vorteile und vorteilhafte Ausgestaltungen ergeben sich aus den Unteransprüchen und der Beschreibung.

In der Zeichnung ist ein nachfolgend näher beschriebenes Ausführungsbeispiel der Erfindung dargestellt. Es zeigt:
- Fig.1:: eine Draufsicht auf eine erfindungsgemäße Umhüllvorrichtung mit einem rotierend antreibbaren Ring mit zwei aktiven Umhüllmaterialbahnrollen während des Umhüllbetriebes und zwei Vorrats-Umhüllmaterialbahnrollen, die auf dem Ring bereitgehalten werden und
- Fig. 2 bis 7.:: vereinfachte Draufsichten gemäß Fig. 1 der wesentlichen aufeinanderfolgenden Funktionen des erfindungsgemäßen Verfahrens in der erfindungsgemäßen Vorrichtung, wobei die Doppelrollenanordnung als Vorstreckeinrichtung und die beiden Vorrats- und Umhüllmaterialbahnrollen übersichtshalber weggelassen sind.

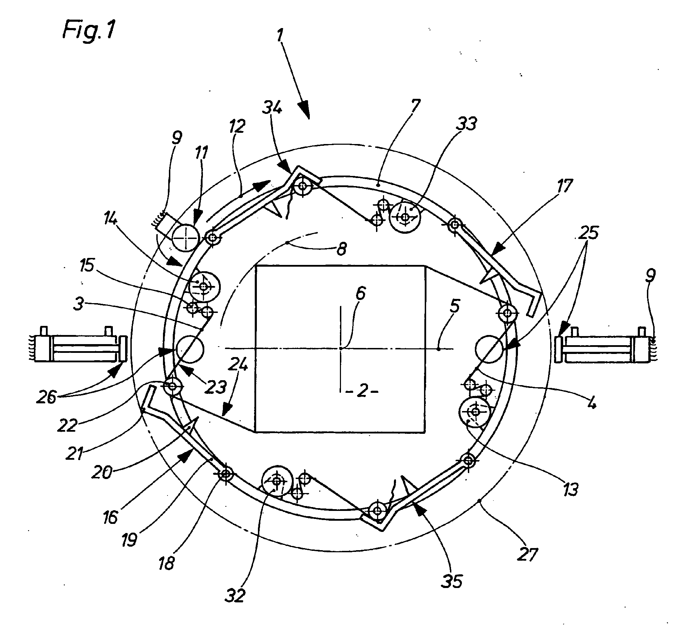

In Figur 1 ist eine Draufsicht auf eine Umhüllvorrichtung 1 zum gleichzeitigen Umwickeln eines Rundballens 2 mit zwei Folienbahnen 3, 4 während des Umhüllbetriebes dargestellt. Hinsichtlich Aufbau und Wirkungsweise einer derartigen Vorrichtung kann beispielsweise auf die WO 00/36903 verwiesen werden, wobei hier nur die Umhüllvorrichtung 1 ohne Presse dargestellt ist, wie es in der Praxis am häufigsten vorkommt. Anstelle eines Rundballens 2 kann auch ein Quaderballen entsprechend eingewickelt werden.

Der Rundballen 2 ruht auf einer nicht dargestellten Fördereinrichtung und wird während des Umhüllbetriebes um seine Rotations-Zylinderachse 5 gedreht. Die Umhüllvorrichtung 1 ist in diesem Beispiel als um eine vertikale Achse 6 rotierend antreibbarer Ring 7 ausgestaltet, dessen Durchmesser größer ist als der gestrichelt gezeichnete Hüllkreis 8 des Ballens 2. Der Ring 7 umgibt den Rundballen 2 etwa in der horizontalen Mittelachsebene des Rundballens 2, ist drehbar auf nicht dargestellten Lagern am Gestell 9 geführt und wird durch eine geeignete Antriebsquelle, wie beispielsweise einen Hydromotor 11 in Pfeilrichtung 12 angetrieben. Der Ring 7 trägt zwei diametral gegenüberliegende Folienrollen 13, 14, denen jeweils eine Doppelrollenanordnung 15 zugeordnet ist, die zum Vorspannen der über die Doppelrollenanordnung 15 geführten Folienbahn 3, 4 dient. Die gängigen Folienrollen weisen eine Lauflänge von beispielsweise 1800m auf. Mit zwei Folienrollen lassen sich etwa 40 Rundballen mit jeweils sechs Folienlagen umwickeln.

Neu ist, dass für jede Folienbahn 3, 4 eine Festhalte- und Trenneinrichtung 16, 17 auf dem Ring 7 angeordnet ist. Die Festhalte- und Trenneinrichtung 16, 17 besteht aus einem um eine vertikale Achse 18 verschwenkbaren Hebel 19 mit einem Trennelement 20 und einem winkelförmigen Klemmelement 21. Das Klemmelement 21 wirkt mit einer am Ring 7 drehbar gelagerten Umlenkrolle 22 derart zusammen, dass der der Folienrolle 13 benachbarte Folienabschnitt 23 bei Betätigung des Hebels 19 zuerst die Folienbahn 3 auf der Umlenkrolle 22 mittels des angedrückten Klemmelementes 21 festhält und dann den dem Rundballen 2 zugewandten Folienabschnitt 24 mittels des Trennelementes 20 abtrennt, wobei sich der Ring 7 noch um einige Winkelgrade weiter in Pfeilrichtung 12 dreht.

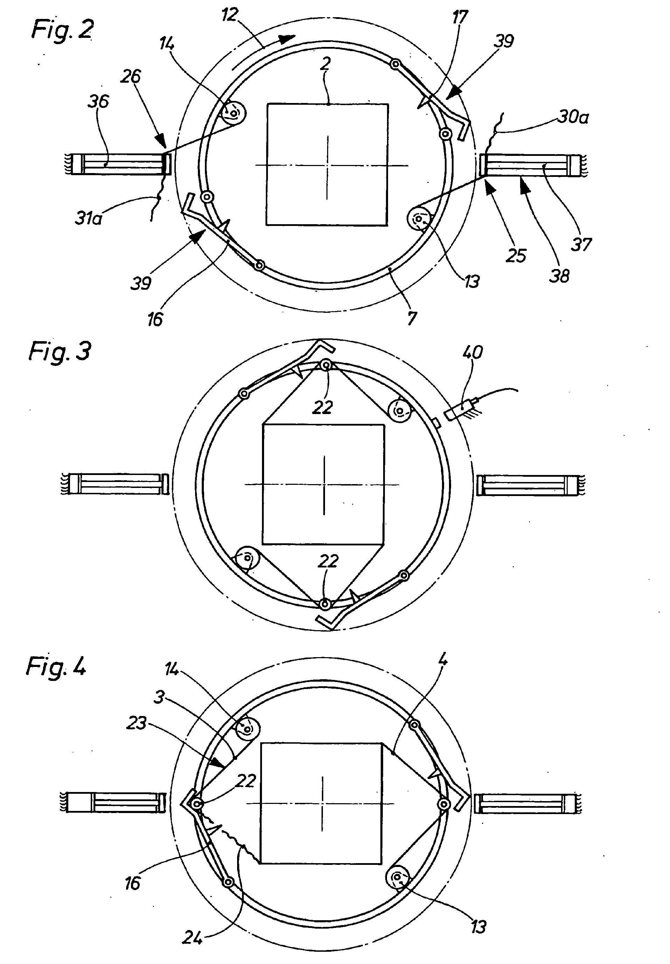

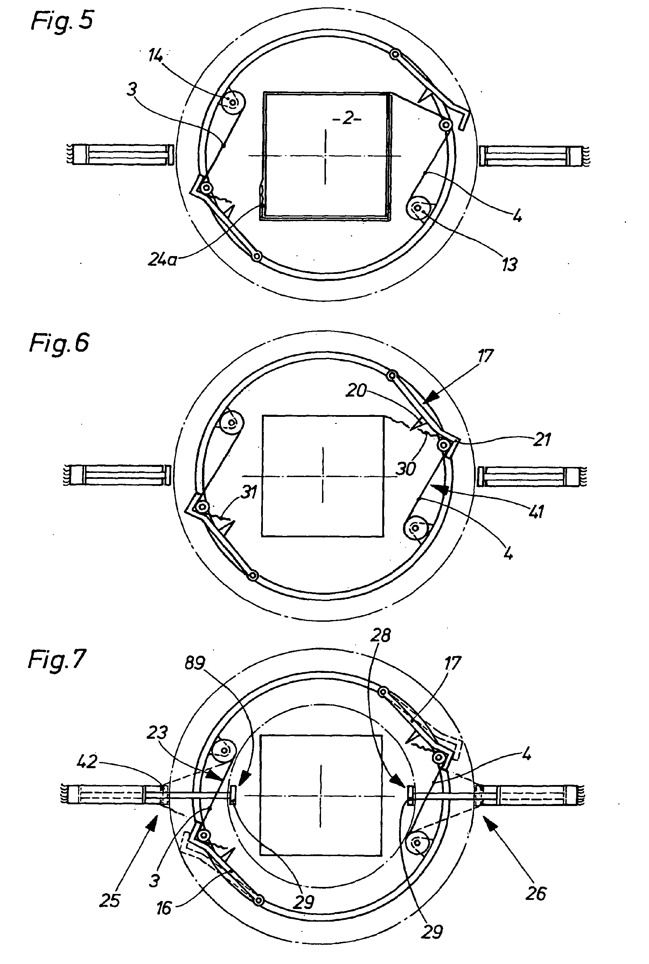

Darüber hinaus ist neu, dass jeder Folienbahn 3, 4 zusätzlich eine am Gestell 9 angeordnete Festhalteeinrichtung 25, 26 zugeordnet ist, die innerhalb der Umlaufbahn 27 des Ringes 7 aber in vertikaler Richtung unterhalb dessen Umlaufbahn 27 gelegen und senkrecht zur Zeichenblattebene verfahrbar ist. Die Anordnung ist so gewählt, dass die Festhalteeinrichtung 25 ,26 in ihrer ausgefahrenen Position 28, siehe Fig. 7, den festgehaltenen Folienabschnitt 23 bei angehaltenem Ring 7 von oben mittels eines Hakens 29 übergreift und beim anschließenden Einfahren des Hakens 29 die Folienbahn 3, 4 in vertikaler Richtung zusammengerafft und festgehalten wird, siehe in Strichlinie dargestellter Folienverlauf und gestrichelt gezeichnete Stellung der Festhalteeinrichtung 25, 26 in Fig. 7. Erst dann wird der bis dahin durch die Festhalte-und Trenneinrichtung 16, 17 festgehaltene Folienabschnitt 23 aus seiner am rotierenden Ring 7 befestigten Lage durch Öffnen der Hebel 19 in die in Fig. 2 dargestellte Position freigegeben. Um zeichnerische Überschneidungen von Bauteilen zu vermeiden, ist die ortsfeste Festhalteeinrichtung 25, 26 übersichtshalber in einer um 90° in die Zeichenblattebene gekippten und außerhalb des Ringes 7 gelegenen Lage dargestellt. Hinsichtlich Aufbau und Wirkungsweise vorgenannter Festhalteeinrichtung 25, 26 kann beispielsweise auf die DE 89 15 767.2 U1 verwiesen werden, wobei in diesem Fall keine Trenneinrichtung notwendig ist, weil die Trennung der Folienbahn 3, 4 bereits durch die am rotierenden Ring 7 angeordneten Trennelemente 20 erfolgt.

Da alle abgetrennten Folienenden 30a ,31a zunächst durch die Festhalte-und Trenneinrichtung 16, 17 auf dem rotierenden Ring 7 festgehalten werden und somit mit dem Ring 7 frei rotieren können, ist es möglich, zusätzliche Vorrats-Folienrollen 32, 33 mit zugehörigen Festhalte- und Trenneinrichtungen 34, 35 auf dem Ring 7 zu lagern, so dass für den Start des nächsten Rundballens 2 frei gewählt werden kann, welche und wie viele Folienbahnen durch die ortsfesten Festhalteeinrichtungen 25, 26 übernommen und für die Umhüllung verwendet werden sollen. Durch Bevorratung gleicher Folienqualitäten lässt sich bei Aufbrauch einer Folienrolle 13 ohne Umrüstaufwand automatisch oder manuell beispielsweise per Knopfdruck die neue Folienrolle 32 ansteuern. Es können aber auch unterschiedliche Folienrollen 33 auf dem Ring 7 bevorratet werden, die zur Kennzeichnung des Balleninhalts dienen und sich beispielsweise in der Farbe unterscheiden oder unterschiedliche Kennzeichnungen aufweisen. Es können auch Folienrollen 32, 33 mit unterschiedlicher Dicke, Breite und/oder Vorstreckung bevorratet und bei Bedarf angesteuert werden zur Umwicklung.

Nachstehend wird anhand der Figuren 2 bis 7 der erfindungsgemäße Verfahrensablauf beschrieben:

In Figur 2 befindet sich die Umhüllvorrichtung 1 in Ruheposition. Das von jeder Folienrolle 13, 14 kommende Folienende 30a, 31a ist in den ortsfesten Festhalteeinrichtungen 25, 26 festgeklemmt. Die Hydrozylinder 36, 37 der Festhalteeinrichtung 25, 26 befinden sich in eingefahrener Position 38. Die Festhalte-und Trenneinrichtungen 16, 17 befinden sich in geöffneter Ruheposition 39.

Zum Start des Umhüllvorganges wird der Ring 7 in Pfeilrichtung 12 angetrieben. Dabei werden die Folienenden 30a, 31a während etwa 1,5 Umdrehungen des Ringes 7
festgehalten, so dass jede Folienbahn 3, 4 zunächst über die Umlenkrolle 22 und dann um den Ballen 2 gewickelt wird. Nach 1,5 Umdrehungen öffnen die ortsfesten Festhalteeinrichtungen 25 ,26 kurzzeitig zum Freigeben der Folienenden 30a, 31a. Der rotierend in Pfeilrichtung 12 angetriebene Ring 7 umwickelt dann gemäß Figur 3 den Ballen 2 mit einer vorbestimmten Anzahl von Folienumwicklungen. Die Anzahl der Folienumwicklungen wird mittels eines Sensors 40 gezählt. Die Sollanzahl der Umwicklungen sowie die Anzahl der letzten Überwicklung mit nur einer Folienbahn werden in einer nicht dargestellten Steuerelektronik für den Verfahrensablauf und insbesondere für die Ansteuerung der Festhalte- und Trenneinrichtung 16, 17 auf dem Ring 7 sowie für die Ansteuerung der ortsfesten Festhalteeinrichtungen 25, 26 vorprogrammiert. Desgleichen ist vorprogrammiert, dass bei jedem neuen Umhüllvorgang die jeweils nächste Folienbahn zum Überwickeln verwendet wird, um beide Folienrollen 13, 14 gleichermaßen zu verbrauchen. Realisiert werden kann dieses beispielsweise dadurch, dass bei z.B. zwei aktiven Folienrollen 13, 14 die Festhalte- und Trenneinrichtungen 16, 17 am Ring 7 im Wechsel betätigt werden. Alternativ könnte man aber auch jeweils beim nächsten Ballen 2 den Ring 7 im Falle von zwei aktiven Folienrollen 13, 14 um eine halbe Umdrehung weiterdrehen lassen, bevor die festgeklemmten Folienenden 30, 31 dann aus den rotierenden Festhalte-und Trenneinrichtungen 16, 17 an die ortsfesten Festhalteeinrichtungen 25, 26 übergeben werden.

Sobald die vorprogrammierte Anzahl der Folienumwicklungen abzüglich der eingestellten Überwicklungen mit nur einer Folienbahn 4 erreicht ist, wird eine Festhalte- und Trenneinrichtung 16 betätigt, so dass das Klemmelement 21 den Folienabschnitt 23 auf der Umlenkrolle 22 festklemmt und das Trennelement 20 den Folienabschnitt 24 zwischen Rundballen 2 und Umlenkrolle 22 trennt. Dieser Zustand ist in Figur 4 dargestellt. Der Ring 7 dreht sich nur noch mit der vorprogrammierten Anzahl der Überwicklungen weiter - in diesem Beispiel etwa eine Umdrehung - und überwickelt dabei den bereits auf dem Rundballen 2 befindlichen, bereits abgetrennten Folienabschnitt 24, siehe Figur 5. Das ballenseitige Folienende 24a der Folienbahn 3 liegt somit unter der vorgespannten Folienbahn 4 und kann sich nicht lösen.

Die Darstellung gemäß Figur 6 zeigt die Umhüllvorrichtung am Ende des Umhüllvorganges. Kurz bevor der Ring 7 die programmierte Anzahl der Gesamtumwicklungen oder die Anzahl der Überwicklungen erreicht hat, wird die zweite Festhalte- und Trenneinrichtung 17 betätigt und der Folienabschnitt 41 der Folienbahn 4 während des Festhaltens durch das Klemmelement 21 mittels des Trennelementes 20 in bekannter Weise abgetrennt. Der Ring 7 bleibt in der gezeichneten Endposition stehen.

Figur 7 zeigt die Übergabe der in den mit dem Ring 7 rotierenden Festhalte- und Trenneinrichtungen 16, 17 gehaltenen Folienenden 30a, 31a an die ortsfesten Festhalteeinrichtungen 25, 26. Zunächst fahren die Hydrozylinder 36, 37 die Festhalteeinrichtungen 25, 26 beim Stillstand des Ringes 7 gemäß Figur 7 in vertikaler Richtung über die obere Folienkante nach oben in die Position 28, übergreifen jede Folienbahn 3, 4 mit dem Haken 29 und ziehen die Folie soweit nach unten, bis diese unterhalb des Umlaufbereiches des Ringes 7 mittels des Hakens 29 jeweils auf der Klemmfläche 42 der Festhalteeinrichtung 25, 26 festgehalten wird. Erst jetzt öffnen sich die Festhalte- und Trenneinrichtungen 16, 17. Dieser Zustand ist in Figur 7 in Strichlinie dargestellt und entspricht der in Figur 2 gezeigten Ausgangsposition der Umhüllvorrichtung.

Beim nächsten zu umwickelnden Rundballen wird die Folienbahn 4 zuerst getrennt, während die Folienbahn 3 zum Überwickeln dient und erst dann getrennt wird. Wird für die Umwicklung beispielsweise eine andere Folienfarbe gewünscht, so werden die Vorrats-Folienrollen 32, 33 in den Bereich der ortsfesten Festhalte- und Klemmeinrichtungen 25, 26 gefahren. Der Start und Umhüllvorgang läuft wie vorstehend beschrieben ab. Durch zusätzliches Anordnen einer dritten und vierten Festhalteeinrichtung am Gestell kann der Rundballen 2 bei Bedarf auch gleichzeitig mit drei oder vier Folienbahnen umwickelt werden.

Im Rahmen der Erfindung kann der Überlappungsbereich der Folienbahnen 3, 4 auch durch einen phasenverschobenen Wickelbeginn mit den Folienbahnen 3, 4 erzeugt werden, wodurch am Ende der Umhüllung eine entsprechende Länge einer Umhüllmaterialbahn zum Überlappen der anderen geschaffen wird.

Die Erfindung und die erzielten Vorteile lassen sich in einfacher Weise auch auf Palettenwickler gemäß EP 0 887 266 A1 übertragen, bei denen der zu umwickelnde Körper ruht und gleichzeitig beispielsweise von zwei Dreharmen mit je einer Folienrolle umkreist wird. Die rotierenden Festhalte- und Trenneinrichtungen sind hierbei jeweils an einem Dreharm anzuordnen.

## Patentansprüche

1. Verfahren zum Umhüllen von Körpern (2), insbesondere von Erntegutballen aus Heu, Stroh oder angewelktem Grüngut mit wenigstens zwei Umhüllmaterialbahnen (3, 4), welche von je einem Umhüllmaterialbahnvorrat (13, 14) abgezogen und auf den Körper (2) aufgebracht werden, wobei jede Umhüllmaterialbahn (3, 4) am Ende des Umhüllvorganges getrennt und festgehalten wird, **dadurch gekennzeichnet, dass** die Umhüllmaterialbahnen (3, 4) derart getrennt werden, dass wenigstens eine Umhüllmaterialbahn (4) die andere Umhüllmaterialbahn in Wickelrichtung (12) mit vorbestimmbarer Länge überlappt.

2. Verfahren nach Anspruch 1, **dadurch gekennzeichnet, dass** wenigstens eine Umhüllmaterialbahn (4) später getrennt und festgehalten wird als die andere/n Umhüllmaterialbahn/en (3), und das die zuerst getrennte/n, auf dem Körper (2) befindliche/n Umhüllmaterialbahn/en von der noch nicht getrennten Umhüllmaterialbahn (4) einmal oder mehrere Male überwickelt wird/werden.

3. Verfahren nach Anspruch 1 oder 2, **dadurch gekennzeichnet, dass** die letzte Umhüllmaterialbahn (4) zum Überwickeln der auf dem Körper (2) befindlichen, getrennten Umhüllmaterialbahn/en von einer den Körper (2) um eine Achse umkreisenden Umhüllmaterialbahnrolle (13) abgezogen wird.

4. Verfahren nach einem der Ansprüche 1 bis 3, **dadurch gekennzeichnet, dass** sich der um wenigstens eine Achse (6) rotierende Körper (2) die letzte Umhüllmaterialbahn (4) zum Überwickeln der auf dem Körper (2) befindlichen, getrennten Umhüllmaterialbahn/en (3) selbst von einer Umhüllmaterialbahnrolle (13) abzieht.

5. Verfahren nach einem der Ansprüche 3 oder 4, **dadurch gekennzeichnet, dass** der Körper (2) und die Umhüllmaterialbahnrollen (13, 14) mit entgegengesetzten Drehrichtungen umlaufen.

6. Verfahren nach einem oder mehreren der Ansprüche 1 bis 5, **dadurch gekennzeichnet, dass** die Festhalte- und/oder Trennvorgänge der Umhüllmaterialbahnen (3, 4) direkt oder indirekt in Abhängigkeit von der Anzahl der auf den Körper aufzubringenden Umwicklungen gesteuert werden.

7. Verfahren nach einem oder mehreren der Ansprüche 1 bis 6, **dadurch gekennzeichnet, dass** der Festhalte- und Trennvorgang wenigstens einer Umhüllmaterialbahn (3, 4) direkt oder indirekt in Abhängigkeit von deren Abzugslänge, zeitabhängig oder in Abhängigkeit von der Position der Umhüllmaterialbahnrolle relativ zum Körper (2) gesteuert wird.

8. Verfahren nach einem oder mehreren der Ansprüche 1 bis 7, **dadurch gekennzeichnet, dass** die Freigabe wenigstens einer Umhüllmaterialbahn (3, 4) aus einer ersten Festklemmung (16, 17) erst dann erfolgt, wenn die gleiche Umhüllmaterialbahn (3, 4) in einer zweiten Festklemmung (25, 26) gehalten wird.

9. Verfahren nach einem oder mehreren der vorhergehenden Ansprüche 1 bis 8, **dadurch gekennzeichnet, dass** die Überlappung der Umhüllmaterialbahnen (3, 4) durch zeitversetzten Wickelbeginn der einen Umhüllmaterialbahn (4) gegenüber der anderen (3) erzeugt wird.

10. Verfahren nach einem oder mehreren der Ansprüche 1 bis 8, **dadurch gekennzeichnet, dass** die Umhüllmaterialbahnrollen (13, 14) in regelmäßigem Wechsel für die jeweils letzte/n Überwicklung/en der zuerst getrennten Umhüllmaterialbahn/en (3, 4) verwendet werden.

11. Verfahren nach einem oder mehreren der vorstehenden Ansprüche, **dadurch gekennzeichnet, dass** den Körper (2) eine oder mehrere zusätzliche Umhüllmaterialbahnrollen (32, 33) umkreisen, welche zunächst nicht zur Umhüllung verwendet und erst nach Aufbrauch der momentan zur Umhüllung dienenden Umhüllmaterialbahnrolle (13, 14) oder bei Bedarf aktiviert werden.

12. Verfahren nach einem oder mehreren der vorhergehenden Ansprüche, **dadurch gekennzeichnet, dass** die Umhüllmaterialbahnen (3, 4) den Körper (2) schraubenlinienförmig umwickeln, und dass während der Überwicklung der zuerst vom Körper (2) getrennten Umhüllmaterialbahn (3) durch die noch nicht getrennte Umhüllmaterialbahn (4) der Überlappungsbereich der beiden Umhüllmaterialbahnen (3, 4) vergrößert oder wenigstens konstant gehalten wird.

13. Verfahren nach einem oder mehreren der vorhergehenden Ansprüche, **dadurch gekennzeichnet, dass** wenigstens zwei Umhüllmaterialbahnen (3, 4) in Wickelrichtung (12) gesehen mit Abstand nacheinander um den Körper (2) gewickelt werden.

14. Verfahren nach einem oder mehreren der vorhergehenden Ansprüche, **dadurch gekennzeichnet, dass** wenigstens zwei sich gegenseitig in ihrer Breite überlappende Umhüllmaterialbahnen gleichzeitig um den Körper gewickelt werden.

15. Vorrichtung zum Durchführen des Verfahrens nach den Ansprüchen 1 bis 14, mit wenigstens zwei auf einer rotierend antreibbaren Führung (7) angeordneten Umhüllmaterialbahnrollen (13, 14), denen jeweils eine am Gestell (9) angeordnete Festhalte- und/oder Trenneinrichtung zugeordnet ist, **dadurch gekennzeichnet, dass** wenigstens jeder zuerst vom Körper zu trennenden Umhüllmaterialbahn (3, 4) eine zusätzliche, auf der rotierend antreibbaren Führung (7) angeordnete Festhalte- und Trenneinrichtung (16, 17) zugeordnet ist.

16. Vorrichtung nach Anspruch 15, **dadurch gekennzeichnet, dass** jeder Umhüllmaterialbahnrolle (13, 14, 32, 33) eine auf der rotierenden Führung (7) angeordnete Festhalte- und Trenneinrichtung (16, 17, 34, 35) zugeordnet ist und zusätzlich wenigstens zwei am Gestell (9) angeordnete Festhalteeinrichtungen (25, 26) vorgesehen sind.

17. Vorrichtung nach Anspruch 15 oder 16, **gekennzeichnet durch** Mittel (40) zur Steuerung der Betätigung der umlaufenden Festhalte- und Trenneinrichtungen (16, 17, 34, 35) und der am Gestell (9) angeordneten Festhalteeinrichtung/en (25, 26).

18. Vorrichtung nach einem der Ansprüche 15 bis 17, **dadurch gekennzeichnet, dass** Mittel vorgesehen sind zur Steuerung des Drehantriebes (11) der Führung (7) oder zum wechselnden Betätigen der Festhalte- und Trenneinrichtungen (16, 17) derart, dass bei jedem neuen Umhüllprozess automatisch jeweils die nächste Umhüllmaterialbahnrolle (13, 14) zur Überwicklung der zuerst getrennten Umhüllmaterialbahnen (3) verwendet wird, so dass alle Umhüllmaterialbahnrollen (13, 14) gleichzeitig aufgebraucht werden.

19. Vorrichtung nach einem der Ansprüche 15 bis 18, **dadurch gekennzeichnet, dass** auf der Führung (7) zusätzlich eine oder mehrere Umhüllmaterialbahnrollen (32, 33) angeordnet sind, deren Umhüllmaterialbahn während des Umhüllvorganges jeweils in einer mit der Führung (7) umlaufenden Festhalte- und Trenneinrichtung (34, 35) bereitgehalten wird und ohne Umrüstaufwand bei Bedarf zur Umhüllung verwendbar ist.

20. Vorrichtung nach Anspruch 19, **dadurch gekennzeichnet, dass** alle Umhüllmaterialbahnrollen (13, 14, 32, 33) gleicher Qualität und Abmessung sind.

21. Vorrichtung nach Anspruch 19, **dadurch gekennzeichnet, dass** eine oder mehrere Umhüllmaterialbahnrollen (13, 14, 32, 33) unterschiedlicher Qualität, Farbe, Dicke, Abmessung, Vorstreckung und/oder Kennzeichnung sind, von denen der Bediener jeweils die zur Umhüllung eines Körpers (2) gewünschte auswählen kann.

22. Vorrichtung nach einem oder mehreren der Ansprüche 15 bis 21, **dadurch gekennzeichnet, dass** der Körper (2) während der Umhüllung um wenigstens eine Achse (5) rotiert und gleichzeitig von wenigstens zwei auf der Führung (7) angeordneten Umhüllmaterialbahnrollen (13, 14) um eine quer zur Körper-Rotationsachse (5) gelegene Achse (6) umkreist wird.

23. Vorrichtung nach einem oder mehreren der Ansprüche 15 bis 22, **dadurch gekennzeichnet, dass** die Führung ein antreibbarer Ring (7) ist.

24. Vorrichtung nach einem oder mehreren der Ansprüche 15 bis 22, **dadurch gekennzeichnet, dass** die Führung wenigstens zwei Dreharme umfasst mit wenigstens je einer Umhüllmaterialbahnrolle.

25. Vorrichtung nach einem oder mehreren der vorhergehenden Ansprüche 15 bis 21, 23, **dadurch gekennzeichnet, dass** der Körper (2) während der Umhüllung in axialer Richtung der Drehachse (6) der den Körper (2) umkreisenden Führung (7) verschiebbar ist.

26. Vorrichtung nach einem oder mehreren der vorhergehenden Ansprüche 15, 21, 23, **dadurch gekennzeichnet, dass** die einen ruhenden Körper (2) umkreisende Führung (7) während der Umhüllung in koaxialer Richtung zur Drehachse (6) der Führung (7) relativ zum Körper (2) bewegbar ist.

27. Vorrichtung nach einem oder mehreren der vorhergehenden Ansprüche 15 bis 26, **gekennzeichnet durch** Mittel, um die Dreh- oder Vorschubgeschwindigkeit des Körpers (2) oder die Dreh- oder Vorschubgeschwindigkeit der Führung (7) direkt oder indirekt in Abhängigkeit von der Betätigung der umlaufenden Festhalte- und Trenneinrichtung (16, 17, 34, 35) und/oder der ortsfest angeordneten Festhalteeinrichtung (25, 26) zu steuern.

## Claims

1. Method for wrapping bodies (2), in particular harvest-goods bales of hay, straw or wilted greenstuff, with at least two webs (3, 4) of wrapping material that are drawn off from respective wrapping-material-web supplies (13, 14) and are applied to the body (2), with each wrapping-material web (3, 4) being cut and held fast at the end of the wrapping process, **characterised in that** the wrapping-material webs (3, 4) are cut in such a way that at least one wrapping-material web (4) overlaps the other wrapping-material web in the winding direction (12) with a predeterminable length.

2. Method according to claim 1, **characterised in that** at least one wrapping-material web (4) is cut and held fast later than the other wrapping-material web(s) (3), and the wrapping-material web(s) that is/are cut first and located on the body (2) is/are wound over once or several times by the not yet cut wrapping-material web (4) .

3. Method according to claim 1 or 2, **characterised in that** the last wrapping-material web (4) for winding over the cut wrapping-material web(s) located on the body (2) is drawn off from a wrapping-material-web roll (13) encircling the body (2) about an axis.

4. Method according to one of claims 1 to 3, **characterised in that** the body (2) that rotates about at least one axis (6) itself draws off from a wrapping-material-web roll (13) the last wrapping-material web (4) for winding over the cut wrapping-material web(s) (3) located on the body (2).

5. Method according to one of claims 3 or 4, **characterised in that** the body (2) and the wrapping-material-web rolls (13, 14) circulate with opposite directions of rotation.

6. Method according to one or more of claims 1 to 5, **characterised in that** the processes of holding fast and/or cutting the wrapping-material webs (3, 4) are controlled directly or indirectly as a function of the number of windings to be applied to the body.

7. Method according to one or more of claims 1 to 6, **characterised in that** the process of holding fast and cutting at least one wrapping-material web (3, 4) is controlled directly or indirectly as a function of the latter's draw-off length, as a function of time or as a function of the position of the wrapping-material-web roll relative to the body (2).

8. Method according to one or more of claims 1 to 7, **characterised in that** the release of at least one wrapping-material web (3, 4) from a first clamping means (16, 17) is only effected when the same wrapping-material web (3, 4) is held in a second clamping means (25, 26).

9. Method according to one or more of the preceding claims 1 to 8, **characterised in that** the overlapping of the wrapping-material webs (3, 4) is produced by time-staggered commencement of winding of the one wrapping-material web (4) in relation to the other (3).

10. Method according to one or more of claims 1 to 8, **characterised in that** the wrapping-material-web rolls (13, 14) are used in regular alternation for the respective last over-winding(s) of the wrapping-material web(s) (3, 4) cut first.

11. Method according to one or more of the above claims, **characterised in that** encircling the body (2) there are one or more additional wrapping-material-web rolls (32, 33) which are not used in the first instance for wrapping purposes and are only activated after the wrapping-material-web roll (13, 14) currently serving for wrapping purposes has been used up or when required.

12. Method according to one or more of the preceding claims, **characterised in that** the wrapping-material webs (3, 4) wind around the body (2) in a helical manner, and **in that** during the over-winding of the wrapping-material web (3) first cut from the body (2) by the wrapping-material web (4) not yet cut the overlapping region of the two wrapping-material webs (3, 4) is increased or is at least kept constant.

13. Method according to one or more of the preceding claims, **characterised in that** at least two wrapping-material webs (3, 4), when viewed in the winding direction (12), are wound with spacing, in succession, around the body (2).

14. Method according to one or more of the preceding claims, **characterised in that** at least two wrapping-material webs that mutually overlap in terms of their width are simultaneously wound around the body.

15. Apparatus for carrying out the method in accordance with claims 1 to 14 with at least two wrapping-material-web rolls (13, 14) which are arranged on a guide (7) that can be driven to rotate and with which a respective holding and/or cutting device arranged on the frame (9) is associated, **characterised in that** an additional holding and cutting device (16, 17) that is arranged on the guide (7) that can be driven to rotate is associated at least with each wrapping-material web (3, 4) that is to be cut from the body first.

16. Apparatus according to claim 15, **characterised in that** associated with each wrapping-material-web roll (13, 14, 32, 33) there is one holding and cutting device (16, 17, 34, 35), which is arranged on the rotating guide (7), and in addition at least two holding devices (25, 26) are provided that are arranged on the frame (9).

17. Apparatus according to claim 15 or 16, **characterised by** means (40) to control the actuation of the circulating holding and cutting devices (16, 17, 34, 35) and the holding device(s) (25, 26) arranged on the frame (9).

18. Apparatus according to one of claims 15 to 17, **characterised in that** means are provided to control the rotary drive (11) of the guide (7) or to actuate the holding and cutting devices (16, 17) alternately in such a way that with each new wrapping process automatically in each case the next wrapping-material-web roll (13, 14) is used to wind over the wrapping-material webs (3) cut first so that all the wrapping-material-web rolls (13, 14) are used up simultaneously.

19. Apparatus according to one of claims 15 to 18, **characterised in that** arranged on the guide (7) there are in addition one or more wrapping-material-web rolls (32, 33), the wrapping-material web of which is held ready during the wrapping process in each case in a holding and cutting device (34, 35) circulating with the guide (7) and can be used without outlay on retrofitting, if required, for wrapping purposes.

20. Apparatus according to claim 19, **characterised in that** all the wrapping-material-web-rolls (13, 14, 32, 33) are of the same quality and dimension.

21. Apparatus according to claim 19, **characterised in that** one or more wrapping-material-web rolls (13, 14, 32, 33) are of differing quality, colour, thickness, dimension, pre-stretch and/or characterisation, from which the operator can select the respective roll that is desired to wrap a body (2).

22. Apparatus according to one or more of claims 15 to 21, **characterised in that** during the wrapping the body (2) rotates about at least one axis (5) and at the same time is encircled by at least two wrapping-material-web rolls (13, 14), which are arranged on the guide (7), about an axis (6) that is located crosswise in relation to the body's rotational axis (5).

23. Apparatus according to one or more of claims 15 to 22, **characterised in that** the guide is a drivable ring (7).

24. Apparatus according to one or more of claims 15 to 22, **characterised in that** the guide comprises at least two rotary arms with at least one respective wrapping-material-web roll.

25. Apparatus according to one or more of the preceding claims 15 to 21, 23, **characterised in that** the body (2) can be displaced during the wrapping in an axial direction of the rotational axis (6) of the guide (7) encircling the body (2).

26. Apparatus according to one or more of the preceding claims 15, 21, 23, **characterised in that** the guide (7) encircling a resting body (2) can be moved during the wrapping in a coaxial direction in relation to the rotational axis (6) of the guide (7) relative to the body (2).

27. Apparatus according to one or more of the preceding claims 15 to 26, **characterised by** means to control the rotational or advance speed of the body (2) or the rotational or advance speed of the guide (7) directly or indirectly as a function of the actuation of the circulating holding and cutting device (16, 17, 34, 35) and/or the holding device (25, 26) arranged in a stationary manner.

## Revendications

1. Procédé pour envelopper des corps (2), en particulier des bottes de récoltes composées de foin, de paille ou de fourrage vert préfané, avec au moins deux bandes de matériau enveloppant (3, 4) lesquelles sont prélevées respectivement dans une réserve de bandes de matériau enveloppant (13, 14) et appliquées sur le corps (2), chaque bande de matériau enveloppant (3, 4) étant séparée et maintenue à la fin du processus d'enveloppement, **caractérisé en ce que** les bandes de matériau enveloppant (3, 4) sont séparées de telle manière qu'au moins une bande de matériau enveloppant (4) chevauche l'autre bande de matériau enveloppant dans la direction d'enroulement (12) sur une longueur pouvant être préalablement déterminée.

2. Procédé selon la revendication 1, **caractérisé en ce qu'**au moins une bande de matériau enveloppant (4) est séparée et maintenue plus tard que l'autre/les autres bande(s) de matériau enveloppant (3), et **en ce que** la/les première(s) bande(s) de matériau enveloppant tout d'abord séparée(s), qui se trouve(nt) sur le corps (2) est/sont entourée(s) une fois ou plusieurs fois par la bande de matériau enveloppant qui n'est pas encore séparée (4).

3. Procédé selon la revendication 1 ou 2, **caractérisé en ce que** la dernière bande de matériau enveloppant (4) destinée à entourer la/les bande(s) de matériau enveloppant séparée(s) située(s) sur le corps (2) est prélevée d'un rouleau de bande de matériau enveloppant (13) qui tourne autour du corps (2) autour d'un axe.

4. Procédé selon l'une des revendications 1 à 3, **caractérisé en ce que** le corps (2) en rotation autour d'au moins un axe (6) prélève lui-même d'un rouleau de bande de matériau enveloppant (13) la dernière bande de matériau enveloppant (4) pour envelopper la/les bande(s) de matériau enveloppant séparée(s) (3) située(s) sur le corps (2) .

5. Procédé selon l'une des revendications 3 ou 4, **caractérisé en ce que** le corps (2) et les rouleaux de bande de matériau enveloppant (13, 14) tournent dans des sens de rotation opposés.

6. Procédé selon l'une quelconque ou plusieurs des revendications 1 à 5, **caractérisé en ce que** les processus de maintien et/ou de séparation des bandes de matériau enveloppant (3, 4) sont pilotés directement ou indirectement en fonction du nombre d'enroulements à appliquer sur le corps.

7. Procédé selon l'une ou plusieurs des revendications 1 à 6, **caractérisé en ce que** le processus de maintien et de séparation d'au moins une bande de matériau enveloppant (3, 4) est piloté directement ou indirectement en fonction de sa longueur de déroulement, en fonction du temps ou en fonction de la position du rouleau de bande de matériau enveloppant par rapport au corps (2).

8. Procédé selon l'une quelconque ou plusieurs des revendications 1 à 7, **caractérisé en ce que** la libération d'au moins une bande de matériau enveloppant (3, 4) d'un premier dispositif de serrage (16, 17) n'a lieu que lorsque la même bande de matériau enveloppant (3, 4) est maintenue dans un deuxième dispositif de serrage (24, 26).

9. Procédé selon l'une ou plusieurs des revendications précédentes 1 à 8, **caractérisé en ce que** le chevauchement des bandes de matériau enveloppant (3, 4) est généré par un début d'enroulement décalé dans le temps d'une bande de matériau enveloppant (4) par rapport à l'autre (3).

10. Procédé selon l'une ou plusieurs des revendications 1 à 8, **caractérisé en ce que** les rouleaux de bande de matériau enveloppant (13, 14) sont utilisés alternativement à intervalles réguliers pour entourer respectivement une dernière fois la/les bande(s) de matériau enveloppant (3, 4) séparée(s) la/les première (s).

11. Procédé selon l'une ou plusieurs des revendications précédentes, **caractérisé en ce qu'**un ou plusieurs rouleaux de bande de matériau enveloppant (32, 33) tournent autour du corps (2), lesquels ne sont tout d'abord pas utilisés pour envelopper et ne sont activés qu'après un épuisement complet du rouleau de bande de matériau enveloppant (13, 14) servant momentanément à envelopper ou en cas de besoin.

12. Procédé selon l'une ou plusieurs des revendications précédentes, **caractérisé en ce que** les bandes de matériau enveloppant (3, 4) entourent le corps (2) suivant un trajet hélicoïdal et **en ce que**, pendant que la première bande de matériau enveloppant (3), séparée du corps (2) la première, est entourée par la bande de matériau enveloppant (4) qui n'est pas encore séparée, la zone de chevauchement des deux bandes de matériau enveloppant (3, 4) est agrandie ou au moins maintenue constante.

13. Procédé selon l'une ou plusieurs des revendications précédentes, **caractérisé en ce qu'**au moins deux bandes de matériau enveloppant (3, 4) sont enroulées autour du corps (2) avec un écart l'une par rapport à l'autre vu dans le sens d'enroulement (12).

14. Procédé selon l'une ou plusieurs des revendications précédentes, **caractérisé en ce qu'**au moins deux bandes de matériau enveloppant qui se chevauchent mutuellement sur leur largeur sont enroulées simultanément autour du corps.

15. Dispositif permettant d'exécuter le procédé selon les revendications 1 à 14, avec au moins deux rouleaux de bande de matériau enveloppant (13, 14) disposés sur un guidage (7) pouvant être entraîné par rotation, auxquels est associé respectivement un dispositif de maintien et/ou de séparation disposé sur le bâti (9), **caractérisé en ce qu'**un dispositif de maintien et de séparation (16, 17) supplémentaire, disposé sur le guidage (7) pouvant être entraîné par rotation est associé au moins à chaque bande de matériau enveloppant (3, 4) à séparer d'abord par le corps.

16. Dispositif selon la revendication 15, **caractérisé en ce qu'**un dispositif de maintien et de séparation (16, 17, 34, 35) disposé sur le guidage rotatif (7) est associé à chaque rouleau de bande de matériau enveloppant (13, 14, 32, 33) et **en ce qu'**en outre au moins deux dispositifs de maintien (25, 26) disposés sur le bâti (9) sont prévus.

17. Dispositif selon la revendication 15 ou 16, **caractérisé par** des moyens (40) pour la commande de l'actionnement des dispositifs de maintien et de séparation en rotation (16, 17, 34, 35) et du/des dispositif(s) de maintien (25, 26) disposé(s) sur le bâti (9) .

18. Dispositif selon l'une des revendications 15 à 17, **caractérisé en ce que** des moyens sont prévus pour commander l'entraînement de rotation (11) du guidage (7) ou pour actionner de manière alternative des dispositifs de maintien et de séparation (16, 17), de telle manière que lors de chaque nouveau processus d'enveloppement le rouleau de bande de matériau enveloppant (13, 14) suivant est respectivement utilisé automatiquement pour entourer les bandes de matériau enveloppant (3) d'abord séparées, si bien que tous les rouleaux de bande de matériau enveloppant (13, 14) sont épuisés en même temps.

19. Dispositif selon l'une quelconque des revendications 15 à 18, **caractérisé en ce qu'**un ou plusieurs rouleaux de bande de matériau enveloppant (32, 33) supplémentaires, dont la bande de matériau enveloppant est d'une part tenue à disposition dans un dispositif de maintien et de séparation (34, 35) en rotation avec le guidage (7) pendant le processus d'enveloppement et d'autre part peut être utilisée pour envelopper sans dépense de réadaptation en cas de besoin, sont disposés sur le guidage (7).

20. Dispositif selon la revendication 19, **caractérisé en ce que** tous les rouleaux de bande de matériau enveloppant (13, 14, 32, 33) sont de qualité et de dimensions identiques.

21. Dispositif selon la revendication 19, **caractérisé en ce qu'**un ou plusieurs rouleaux de bande de matériau enveloppant (13, 14, 32, 33) sont de qualité, de couleur, d'épaisseur, de dimensions, de pré-extension et/ou de caractérisation différents, l'utilisateur pouvant respectivement choisir ce qu'il souhaite pour l'enveloppement d'un corps (2).

22. Dispositif selon l'une ou plusieurs des revendications 15 à 21, **caractérisé en ce que**, pendant l'enveloppement, le corps (2) tourne autour d'au moins un axe (5) et **en ce qu'**en même temps au moins deux rouleaux de bande de matériau enveloppant (13, 14) disposés sur le guidage (7) lui tournent autour, autour d'un axe (6) situé perpendiculairement à l'axe de rotation du corps (5).

23. Dispositif selon l'une quelconque ou plusieurs des revendications 15 à 22, **caractérisé en ce que** le guidage est un anneau (7) pouvant être actionné.

24. Dispositif selon l'une ou plusieurs des revendications 15 à 22, **caractérisé en ce que** le guidage comporte au moins deux bras rotatifs avec au moins un rouleau de bande de matériau enveloppant chacun.

25. Dispositif selon l'une ou plusieurs des revendications 15 à 21, 23, **caractérisé en ce que**, pendant l'enveloppement, le corps (2) peut être déplacé dans le sens axial de l'axe de rotation (6) du guidage (7) qui tourne autour du corps (2).

26. Dispositif selon l'une ou plusieurs des revendications précédentes 15, 21, 23, **caractérisé en ce que**, pendant l'enveloppement, le guidage (7) tournant autour d'un corps (2) au repos est mobile par rapport au corps (2) dans le sens coaxial par rapport à l'axe de rotation (6) du guidage (7).

27. Dispositif selon l'une ou plusieurs des revendications précédentes 15 à 26, **caractérisé par** des moyens pour commander directement ou indirectement la vitesse de rotation ou d'avance du corps (2) ou la vitesse de rotation ou d'avance du guidage (7) en fonction de l'actionnement du dispositif de maintien et de séparation (16, 17, 34, 35) qui tourne autour et/ou du dispositif de maintien (25, 26) disposé de manière fixe.
